# EUROPÄISCHE PATENTSCHRIFT

(11) **EP 0 695 023 B1**
(45) Veröffentlichungstag und Bekanntmachung des Hinweises auf die Patenterteilung: **23.01.2002**
(21) Anmeldenummer: 95111214.3
(22) Anmeldetag: 18.07.1995
(51) Int. Cl.: H02M 3/335

(54) **Schaltnetzteil mit Snubber-Netzwerk**
Switching power supply with snubber circuit
Alimentation à découpage avec circuit amortisseur

(30) Priorität: 27.07.1994 EP 94111713
(43) Veröffentlichungstag der Anmeldung: 31.01.1996
(73) Patentinhaber: DEUTSCHE THOMSON-BRANDT GMBH, 78048 Villingen-Schwenningen (DE)
(72) Erfinder: Scharlach, Peter, D-78050 Villingen-Schwenningen (DE); Louvel, Jean-Paul, D-78050 Villingen-Schwenningen (DE)

(56) Entgegenhaltungen:
- PATENT ABSTRACTS OF JAPAN vol. 017 no. 653 (E-1469) ,3.Dezember 1993 & JP-A-05 211767 (NEC CORP) 20.August 1993,
- PATENT ABSTRACTS OF JAPAN vol. 014 no. 200 (E-0920) ,24.April 1990 & JP-A-02 041657 (FUJITSU DENSO LTD) 9.Februar 1990,

## Beschreibung

Die Erfindung geht aus von einem Schaltnetzteil gemäß dem Oberbegriff des Anspruchs 1.

Bei einem derartigen Schaltnetzteil ist im allgemeinen zwischen einem die Impulsspannung führenden Ende einer Wicklung des Transformators und einem wechselspannungsmäßig kalten Punkt, z.B. Erde oder Betriebsspannung, ein Netzwerk aus einem Kondensator, einem Widerstand und einer Diode geschaltet. Dieses Netzwerk, das auch als Snubber bezeichnet wird, dient dazu, die Amplitude von störenden Spannungsspitzen an der Wicklung beim Abschalten des Schalttransistors zu verringern. Wenn der Schalttransistor abgeschaltet wird, wird Energie in den Kondensator dieses Netzwerke gespeichert. Da diese Energie von dem Transformator geliefert wird, ergibt sich in erwünschter Weise ein langsamerer Anstieg der Kollektorspannung. Wenn der Schalttransistor wieder eingeschaltet wird, wird die in dem Kondensator gespeicherte Energie in den Widerstand des Netzwerkes übertragen und dort im Wärme umgewandelt. Diese Verlustenergie ist beträchtlich und kann in der Größenordnung von 1 - 5 Watt liegen.

Ein Schaltnetzteil nach dem Oberbegriff des Anspruchs 1 ist aus der DE 42 09 214 A1 bekannt. Das hierin angegebene Netzwerk wirktinsbesondere, wenn die sekundärseitige Diode infolge einer Spannungsumkehr zu sperren beginnt und begrenzt hierdurch die negative Spitzenspannung an dieser Diode.

In einem derartigen Netzwerk wird die Verringerung der Steilheit des Spannungsanstieges beim Abschalten des Schalttransistors so abgewandeer, daß die in dem Netzwerk an dem Widerstand erzeugte und verlorene Energie verringert wird.

Bei dem Schaltnetzteil ist die Sekundärwicklung über die Reihenschaltung eines Kondensators und einer zweiten Diode an den Ladekondensator angeschlossen, und der Mittelpunkt der Reihenschaltung ist über eine dritte Diode mit Erde verbunden.

Es wird somit die beim Abschalten des Schalttransistors in dem Kondensator des Netzwerks gespeicherte Energie beim Einschalten des Schalttransistors nicht in einem Widerstand in Wärme umgewandelt, sondern in vorteilhafter Weise im Sinne einer Energierückgewinnung in den Ladekondensator der Gleichrichterschaltung zurückgeliefert. Das erfindungsgemäße Netzwerk enthält somit im wesentlichen nur Bauteile wie Dioden und Kondensatoren, die praktisch verlustfrei arbeiten. Der bisher in dem genannten Snubber-Netzwerk verwendete Widerstand zur Umsetzung der Energie in Wärme wird nicht mehr benötigt. Das Schaltnetzteil ermöglicht auch die Verwendung eines größeren Kondensators für das genannte Netzwerk und damit eine Verbesserung in der Verringerung der Amplitude der Impulsspitzen am Transformator.

Bei der Erfindung liegt in Reihe zu der dritten Diode noch eine Induktivität. Diese bewirkt, daß der Strom durch die dritte Diode nicht sprungartig ansteigt, sondern von null an langsam zunimmt. Vorzugsweise liegt parallel zu der Induktivität ein Widerstand. Dieser dient dazu, störende Schwingungen zu unterdrücken.

Die Erfindung wird im folgenden anhand der Zeichnung erläutert. Darin zeigen
- Fig. 1: ein Ausführungsbeispiel eines erfindungsgemäßen Schaltnetzteils und
- Fig. 2: Kurven zur Erläuterung der Wirkungsweise der Schaltung nach Fig. 1.

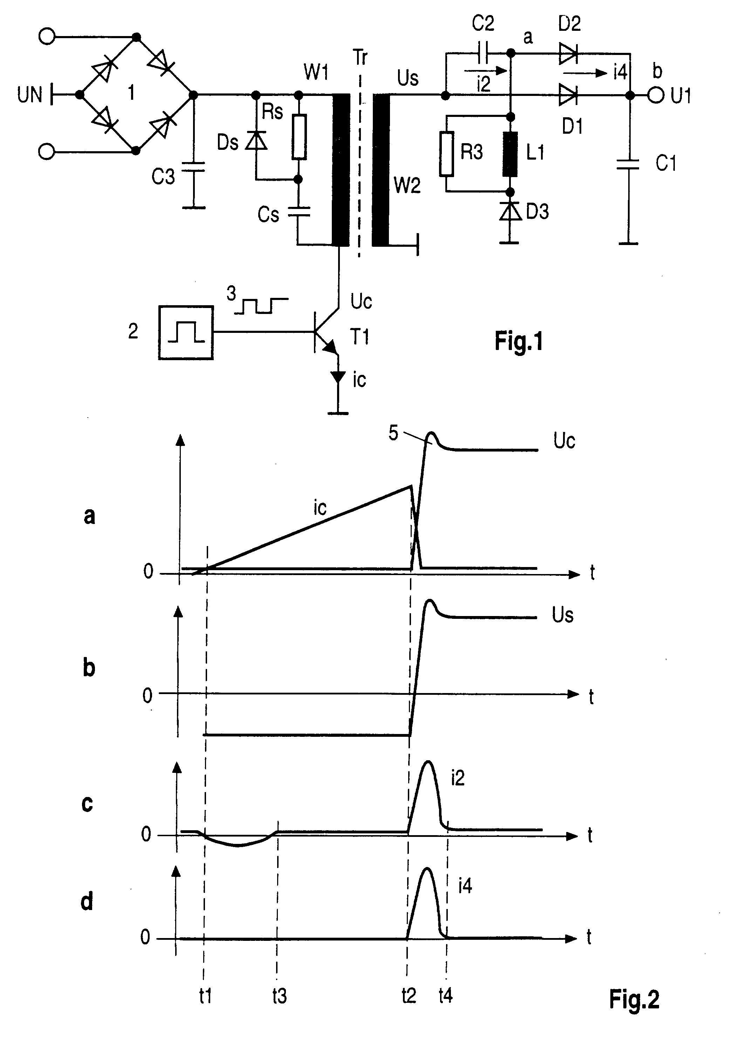

Fig. 1 zeigt ein Schaltnetzteil, das aus einer Netzspannung UN eine Betriebsspannung U1 z.B. für einen Fernsehempfänger oder Videorecorder erzeugt. Dargestellt sind der Netzgleichrichter 1, der Ladekondensator C3, der Transformator Tr mit der Primärwicklung W1 und der Sekundärwicklung W2, der Schalttransistor T1, die Diode D1 zur Erzeugung der Betriebsspannung U1 an dem Ladekondensator C1 sowie ein Steuergenerator 2, der die Schaltspannung 3 für den Schalttransistor T1 erzeugt. Die Schaltspannung 3 ist in der Regel impulsweiten moduliert (PWM). Die Pulsweitenmodulation wird von einer Regelspannung so gesteuert, daß die erzeugte Betriebsspannung U1 in der Amplitde stabilisiert wird. An die Primärwicklung W1 ist ein übliches Snubber-Netzwerk mit dem Kondensator Cs, der Diode Ds und dem Widerstand Rs angeschlossen. Die soweit beschriebene Schaltung ist bekannt.

Es ist auch bekannt, zusätzlich zu dem beschriebenen primärseitigen Snubber-Netzwerk auch an eine Sekundärwicklung ein gleich aufgebautes Snubber-Netzwerk anzuschalten. In Fig. 1 ist ein derartiges sekundärseitiges Snubber-Netzwerk an der Wicklung W2 auch vorhanden. Dieses ist jedoch anders ausgebildet als das Snubbernetzwerk Cs, Rs und Ds an der Primärwicklung W1. Die Sekundärwicklung W2 ist über die Reihenschaltung des Kondensators C2, der Induktivität L1 und der Diode D3 mit Erde verbunden. Der Mittelpunkt a der Reihenschaltung ist über die Diode D2 mit der die Betriebsspannung U1 führenden Klemme b verbunden. Parallel zu der Induktivität L1 liegt ein Widerstand R3.

Das sekundärseitige Netzwerk gemäß Fig. 1 arbeitet folgendermaßen: Während der leitenden Phase des Schalttransistors T1 wird der Kondensator C2 über die Diode D3 und die Induktivität L1 bis auf die negative Spannung während des Vorlaufes an der Wicklung W2 aufgeladen. Die Induktivität L1 begrenzt den Stromanstieg des Stromes, ausgehend von 0 A. Während dieser Zeit wird also Energie in dem Kondensator C2 gespeichert.

Wenn der Schalttransistor T1 abgeschaltet wird, steigt die Spannung Us an der Sekundärwicklung W2 schnell an, bis schließlich die Spannung an der Anode der Diode D2 den Wert der Spannung von U1 am Ladekondensators C1 erreicht. Von diesem Zeitpunkt an wird die in dem Kondensator C2 gespeicherte Energie über die Diode D2 in den Ladekondensator C1 übertragen. Durch diesen Vorgang wird die durch das Netzwerk angestrebte Verringerung in dem Anstieg der Spannung Us, d.h. dUs/dt erreicht. Da das Netzwerk im Gegensatz zu dem primärseitigen Netzwerk keinen mit dem Widerstand Rs vergleichbaren Widerstand enthält, werden bei diesem Vorgang Schwingungen erzeugt. Diese Schwingungen werden durch den Widerstand R3 gedämpft.

In Fig. 2 bezeichnet der Zeitraum t1 - t2 den Hinlauf. Während dieser Zeit ist der Schalttransistor T1 durch die Schaltspannung 3 leitend gesteuert. Der Kollektorstrom ic steigt etwa linear an, während die Kollektorspannung Uc praktisch null ist. Die Spannung Us an der Sekundärwicklung W2 hat dann ihren negativen Wert. Im Zeitpunkt t2 beginnt der sogenannte Rücklauf. Dann ist der Schalttransistor T1 gesperrt, so daß der Kollektorstrom ic schnell abfällt. Dadurch ergibt sich ein steiler Anstieg der Kollektorspannung Uc mit einer Spannungspitze 5, deren Amplitude durch die beschriebenen Snubber-Netzwerke begrenzt wird. Die Spannung Us hat einen ähnlichen Verlauf wie Uc, jedoch keinen Gleichspannungsanteil. Fig. 2c zeigt den Strom i2 durch den Kondensator C2. Von t1 - t3 wird durch diesen Strom der Kondensator C2 aufgeladen. Von t2 - t4 fließt der Strom i2 über die Diode D2, so daß in dem Kondensator C2 gespeicherte Energie in den Ladekondensator C1 übertragen wird. Fig. 2d zeigt den Strom i4 durch die Diode D2, der dem Strom i2 während dieser Zeit entspricht.

## Patentansprüche

1. Schaltnetzteil mit einem Schalttransistor (T1) in Reihe zur Primärwicklung (W1) eines Transformators (Tr), dessen Sekundärwicklung (W2) über eine erste Diode (D1) an einen eine Betriebsspannung (U1) liefernden Ladekondensator (C1) angeschlossen ist, wobei die Sekundärwicklung (W2) über die Reihenschaltung eines Kondensators (C2) und einer zweiten Diode (D2) an den Ladekondensator (C1) angeschlossen ist und der Mittelpunkt (a) der Reihenschaltung über eine dritte Diode (D3) mit Erde verbunden ist, **dadurch gekennzeichnet, daß** in Reihe zu der dritten Diode (D3) eine Induktivität (L1) liegt.

2. Netzteil nach Anspruch 1, **dadurch gekennzeichnet, daß** parallel zu der Induktivität (L1) ein Widerstand (R3) liegt.

## Claims

1. Switched-mode power supply having a switching transistor (T1) in series with the primary winding (W1) of a transformer (Tr), the secondary winding (W2) of which is connected, via a first diode (D1), to a charging capacitor (C1) which delivers an operating voltage (U1), wherein the secondary winding (W2) is connected to the charging capacitor (C1) via the series circuit of a capacitor (C2) and a second diode (D2), and the centre point (a) of the series circuit is connected to earth via a third diode (D3), **characterized in that** an inductance (L1) is connected in series with the third diode (D3).

2. Power supply according to claim 1, **characterized in that** a resistor (R3) is connected in parallel with the inductance (L1).

## Revendications

1. Alimentation à coupure munie d'un transistor de commutation (T1) installé en série par rapport à la bobine primaire (W1) d'un transformateur (Tr), dont la bobine secondaire (W2) est connectée via une première diode (D1) à un condensateur de charge (C1) fournissant une tension de service (U1), où la bobine secondaire (W2) est connectée via le montage en série d'un condensateur (C2) et d'une deuxième diode (D2) au condensateur de charge (C1) et où le centre (a) du montage en série est relié à la terre via une troisième diode (D3), **caractérisée en ce qu**'une inductance (L1) est placée en série par rapport à la troisième diode (D3).

2. Alimentation à coupure conforme à la revendication 1, **caractérisée en ce qu**'une résistance (R3) est placée en parallèle par rapport à l'inductance (L1).
